# EUROPÄISCHE PATENTSCHRIFT

(11) **EP 3 625 483 B1**
(45) Veröffentlichungstag und Bekanntmachung des Hinweises auf die Patenterteilung: **28.07.2021**
(21) Anmeldenummer: 18724517.0
(22) Anmeldetag: 09.05.2018
(51) Int. Cl.: B33Y 80/00, F16J 15/12, F16J 15/16, F16J 15/3236, F16J 15/328, F16J 15/06, F16J 15/3284, F16J 15/3252

(54) **DICHTRING MIT 3D-DRUCK INLAY**
SEALING RING WITH A 3D-PRINTED INLAY
BAGUE D'ÉTANCHÉITÉ AVEC INCRUSTATION IMPRIMÉE EN 3D

(30) Priorität: 17.05.2017 DE 102017208285
(43) Veröffentlichungstag der Anmeldung: 25.03.2020
(73) Patentinhaber: Trelleborg Sealing Solutions Germany GmbH, 70565 Stuttgart (DE)
(72) Erfinder: CRUDU, Monica, 70376 Stuttgart (DE); FRANZ, Martin, 72827 Wannweil (DE); AZZOPARDI, Gianella, Mosta MST 9055 (MT); KECK, Matthias, 71272 Renningen (DE); WEHMANN, Christoph, 70597 Stuttgart (DE)
(74) Vertreter: Kohler Schmid Möbus Patentanwälte
(86) Internationale Anmeldenummer: PCT/EP2018/061987
(87) Internationale Veröffentlichungsnummer: WO 2018/210653

(56) Entgegenhaltungen:
- WO-A1-2016/167770
- DE-A1-102013 104 069
- GB-A- 2 521 394
- GB-A- 2 528 037

## Beschreibung

Die Erfindung betrifft einen Dichtring, umfassend ein elastisch verformbares Polymermaterial und einen Stützring, der zumindest abschnittsweise in dem Polymermaterial formschlüssig eingebettet ist.

Derlei Dichtringe werden in der Praxis seit Langem in Form von (Axial- bzw. Radial) Wellendichtringen bzw. auch in Form von Stangen- bzw. Kolbendichtringen eingesetzt.

Die Stützringe sind in der Regel in einer zur Mittelachse des Dichtrings radialen bzw. axialen Richtung formstabil ausgeführt und weisen zumeist vollumfänglich einen wenig komplexen kreisrunde Querschnittsform auf.

Die Stützringe wie auch das Polymermaterial werden, insbesondere bei einer Massenfertigung der Dichtringe, jeweils als Spritzgussteile aus unterschiedlichen Materialien gefertigt.

DE 10 2013 104 069 A1 offenbart einen Dichtring, bei dem der Stützring als ein 3D-Druckteil aus Hartkunststoff mit einem im Vergleich zum Polymermaterial größeren Elastizitätsmodul ausgeführt ist. Aufgabe der Erfindung ist es, einen Dichtring anzugeben, der einfach und kostengünstig herzustellen ist und der breitere Einsatzmöglichkeiten bietet.

Der erfindungsgemäße Dichtring zeichnet sich dadurch aus, dass der Stützring als ein 3D-Druckteil mit einem schichtweisen Materialaufbau ausgeführt ist und wobei das Material des Stützrings ein größeres Modul aufweist, als das Polymermaterial. Dadurch kann der Dichtring einerseits auf einfache und kostengünstige Weise erzeugt werden. Der als 3D-Druckteil ausgeführte Stützring kann einen komplexeren Aufbau und dadurch bislang nicht erreichte Funktionalitäten aufweisen. Dadurch, dass das Material des Stützrings ein größeres Modul aufweist, als das Polymermaterial, kann der Stützring das Polymermaterial armieren, d.h. dessen Formänderung bei Druckbeaufschlagung limitieren und so einer unerwünschten Verformung des Polymermaterials und damit des Dichtrings entgegenwirken. Das Polymermaterial kann nach der Erfindung am Stützring angespritzt sein, wie dies auch bei den am Markt verfügbaren Dichtringen der Fall ist. Der Stützring ist in einer zur Mittelachse des Dichtrings radialen Richtung elastisch aufweitbar. Der Stützring weist in diesem Fall eine Doppelfunktion auf. Zum einen dient er einer Armierung des Polymermaterials, zum anderen kann durch den Stützring eine vorgespannt dichtende Anlage des Dichtrings gegen eine dynamisch abzudichtende Dichtfläche eines Maschinenelements erreicht werden.

Der Stützring weist erfindungsgemäß formstabile erste Ringsegmente auf, die in Umfangsrichtung des Dichtrings hintereinanderliegend angeordnet und die gelenkig miteinander verbunden sind. Durch die formstabilen ersten Ringelemente kann die für das Abstützen des elastisch verformbaren Polymermaterials erforderliche Lastaufnahmevermögen des Stützrings bereitgestellt werden. Die gelenkige Verbindung der formstabilen ersten Ringelemente erlaubt das elastische Aufweiten des Stützrings, wie dies für eine Vorspannung des Polymermaterials gegen die dynamische Dichtfläche eines Maschinenelements vorteilhaft ist. Darüber hinaus kann der Dichtring auch nicht-rotationssymmetrisch, beispielsweise nierenförmig, verformt werden, was für die Montage des Dichtrings vorteilhaft ist.

Das Polymermaterial des Dichtrings weist nach der Erfindung vorzugsweise einen niedrigeren Schmelzpunkt auf, als das Material des Stützrings. Dadurch kann ein unerwünschtes Anschmelzen des Materials des Stützrings während des Herstellungsprozesses sicher vermieden werden. Hierdurch können filigrane und mithin gegenüber einer thermischen Beschädigung besonders empfindliche Strukturen des Stützrings sicher vor Beschädigung bzw. einem Funktionsverlust bewahrt werden. Auch können dadurch Fertigungstoleranzen geringgehalten werden.

Nach der Erfindung können die formstabilen ersten Ringsegmente jeweils durch mehrere Profilstege gebildet sein, die in Richtung der Mittelachse des Dichtrings voneinander beabstandet hintereinanderliegend angeordnet sind, wobei die Profilstege jeweils zweier unmittelbar benachbart angeordneter erster Ringsegmente wechselweise miteinander kämmen und im Bereich ihrer Kreuzungspunkte miteinander verbunden sind. Bei dieser Bauart kann der Stützring im Sinne eines Endoskeletts das Polymermaterial aussteifen. Durch die Vielzahl von Profilstegen sowie der dazwischenliegend angeordneten Zwischenräume kann eine besonders dauerhafte und mechanisch belastbare Verbindung zwischen dem Polymermaterial und dem Stützring erreicht werden. Einem unerwünschten Form- und damit einhergehenden Funktionsverlust des Dichtrings kann dadurch zuverlässig entgegengewirkt werden.

Die Profilstege der ersten Ringsegmente sind im unbelasteten sowie bevorzugt auch im belasteten einbauzustand des Spannrings vorzugsweise unter einem spitzen Winkel α zum Radius des Spannrings verlaufend angeordnet. Bei einem Aufdehnen des Dichtrings bzw. des Stützrings vergrößert sich der Winkel α entsprechend. Die Profilstege bzw. die ersten Ringsegmente des Stützrings können jeweils baugleich ausgeführt sein, und insbesondere in ihrer jeweiligen Querschnittsform, Länge und Dicke miteinander übereinstimmen.

Nach einer alternativen Ausführungsform der Erfindung können die ersten Ringsegmente in Umfangsrichtung des Stützrings auch voneinander beabstandet angeordnet und jeweils über ein zweites Ringsegment miteinander verbunden sein, das zumindest abschnittsweise elastisch verformbar ist.

In diesem Fall ist die gelenkige Verbindung der ersten Ringsegmente mithin durch die zweiten Ringsegmente bewirkt. Diese zweiten Ringsegmente können im konstruktiv einfachsten Fall jeweils zumindest ein Profilschenkelpaar mit einem ersten und einem zweiten Profilschenkel aufweisen, die über einen Rückenabschnitt miteinander verbunden und relativ zueinander schräg verlaufend angeordnet sind, wobei die beiden Profilschenkel relativ zueinander elastisch aufspreizbar sind. Die zweiten Ringsegmente sind mithin V- bzw. U-förmig ausgebildet. Durch ein Aufspreizen der zweiten Ringsegmente kann der Innen- bzw. Außenquerschnitt des Stützrings vergrößert und so der Dichtring aufgeweitet werden.

Nach der Erfindung kann zumindest ein Teil der zweiten Ringsegmente mehrere Profilschenkelpaare umfassen, die in Umfangsrichtung hintereinander aufgereiht angeordnet und End-zu-End miteinander stoffschlüssig verbunden sind. Die zweiten Ringsegmente weisen dadurch insgesamt eine mehrfach mäanderförmige Form auf, wodurch die Dehnbarkeit des Stützrings nochmals weiter verbessert werden kann.

Gemäß einer besonders bevorzugten Ausführungsform der Erfindung ist die Oberfläche des Dichtrings an einer oder an mehreren Stirnseite(n) und/oder an einer oder mehreren Umfangsseite(n) wenigstens abschnittsweise durch den Stützring gebildet. Der Stützring kann dadurch einer Führung, Lagerung bzw. Positionierung und Befestigung des Dichtrings an einer Dichtungshaltestruktur eines Maschinenteils, beispielsweise einer Haltenut, dienen. Auch kann dadurch einer unerwünschten Extrusion des Dichtrings infolge dessen Druckbeaufschlagung in einen Dichtspalt entgegengewirkt werden. Darüber hinaus kann diese Bauform des Dichtrings fertigungstechnische Vorteile bieten, weil der Stützring so vereinfacht in einem Spritzwerkzeug positioniert werden kann, um das Polymermaterial am Stützring anzuspritzen.

Steht der Stützring über einen durch das Polymermaterial gebildeten Oberflächenabschnitt des Dichtrings hervor, so kann das Polymermaterial des Dichtrings bei der Montage sowie auch während eines Betriebseinsatzes des Dichtrings besonders wirksam vor einer mechanischen bzw. auch thermischen Überbeanspruchung durch Reibung an der dynamisch abzudichtenden Dichtfläche geschützt werden. Darüber hinaus kann der Stützring dadurch als ein Abstandshalter zu anderen Funktionsstrukturen, beispielsweise einer Nutflanke der vorgenannten Haltenut eines Maschinenteils, dienen. Dadurch kann etwa eine Druckaktivierung der Dichtlippe des Dichtrings gewährleistet werden.

Der Stützring kann auch insgesamt in einer zur Mittelachse des Dichtrings radialen Richtung formstabil, d.h. durch im Betriebseinsatz der Dichtung auftretende Druckbelastungen nicht verformbar, ausgeführt sein. Dadurch kann der Stützring ein besonders großes Lastaufnahmevermögen bieten und das Polymermaterial besonders wirksam abstützen bzw. in vorgegebenen Volumenbereichen aussteifen.

Der Stützring weist nach der Erfindung bevorzugt zumindest abschnittsweise eine L-, T- oder eine kreuzförmige Querschnittsform auf. Dadurch kann eine hohe Verwindungsstabilität des Dichtrings erreicht werden. Auch können einzelne Profilschenkel des Stützrings so zur Führung des Dichtrings eingesetzt und bis zur Oberfläche bzw. über die Oberfläche des Polymermaterials herausragen bzw. herausstehen.

Nach einer bevorzugten Weiterbildung der Erfindung weist der Stützring zumindest einen Fluidkanal auf bzw. bildet diesen, durch den im Betriebseinsatz des Dichtrings eine Niederdruckseite des Dichtrings mit einer Hochdruckseite des Dichtrings fluidisch verbindbar ist. Der Fluidkanal erstreckt sich mithin bei einem als Radialwellendichtring oder als eine Stangen- bzw. Kolbendichtung ausgebildeten Dichtring in einer zur Mittelachse des Dichtrings axialen Richtung. Im Falle eines als Axialwellendichtring ausgebildeten Dichtrings erstreckt sich der Fluidkanal in einer radialen Richtung. Der Stützring kann auch mehrere solcher Fluidkanäle aufweisen. Dadurch, dass der Stützring den Fluidkanal bildet, d.h. eine den Fluidkanal umhüllende Wandung aufweist, kann die Herstellung des Dichtrings weiter vereinfacht und kostenintensive zusätzliche Fertigungs- bzw. Nachbearbeitungsschritte des Dichtrings vermieden werden.

Der Dichtring weist nach der Erfindung vorzugsweise eine Dichtlippe mit einer dynamischen Dichtkante auf, wobei der Stützring zumindest abschnittsweise innerhalb der Dichtlippe angeordnet ist. Der Stützring kann sich dabei abschnittsweise mit einzelnen, etwa zungenförmigen, Fortsätzen in die Dichtlippe hineinerstrecken oder aber der Dichtring weist einen umlaufenden Dichtlippenstützabschnitt auf. Der Dichtring kann sich dabei bis zum oder nahezu bis zum freien Ende der Dichtlippe erstrecken und so die Dichtlippe in der gewünschten Weise aussteifen. Obgleich derartige Dichtlippen häufig eine nur geringe Materialstärke (Dicke) aufweisen, kann durch den erfindungsgemäß als 3D-Druckteil ausgeführten Stützring selbst bei der dazu erforderlichen - zumindest abschnittsweise filigranen Ausführung des Stützrings- eine ausreichende Stützwirkung auch im Bereich der Dichtlippe erreicht werden.

Der Stützring kann zwecks einer möglichst dauerhaften und belastbaren mechanischen Verbindung mit dem Polymermaterial mit axial oder radial verlaufend angeordneten Durchgangsausnehmungen versehen sein, in die sich das Polymermaterial hinein bzw. durch die sich das Polymermaterial hindurcherstreckt. Es versteht sich, dass diese Durchgangsausnehmungen von der durch den Stützring in radialer Richtung umgriffenen Ringöffnung des Stützrings bzw. des Dichtrings zu unterscheiden sind.

Ganz besonders bevorzugt kann zumindest ein Teil der ersten Ringsegmente mit einer Durchgangsausnehmung versehen sein, die sich vorzugsweise in Umfangsrichtung des Spannrings durch das jeweilige erste Ringsegment hindurcherstreckt. Die mit den Durchgangsausnehmungen versehenen ersten Ringsegmente sind in diesem Fall somit als Hohlprofile ausgeführt. Dadurch kann zudem der Materialeinsatz für den Stützring gering gehalten werden.

Die ersten Ringsegmente können nach der Erfindung im konstruktiv einfachsten Fall jeweils baugleich ausgeführt sein. Auch können die vorstehend genannten elastisch verformbaren zweiten Ringsegmente jeweils baugleich ausgeführt sein.

Es versteht sich, dass der Stützring aus einem für 3D-Druck geeigneten Material gefertigt ist bzw. besteht. So kann der Stützring aus einem Kunststoffmaterial, insbesondere einem Thermoplast, bestehen.

Ein Verfahren zum Herstellen eines vorstehend erläuterten Dichtrings umfasst die folgenden Schritte:
a. Erzeugen des Stützrings im Wege eines 3D-Druckverfahrens;
b. Anspritzen des Polymermaterials an dem Stützring unter Erzeugung des Dichtrings.

Mit dem Herstellungsverfahren können Dichtringe mit einem Stützring auf einfache und kostengünstige Weise sowie mit geringen Fertigungstoleranzen bereitgestellt werden. Beim 3D-Druck wird der Stützring schichtweise aufgebaut. Als Werkstoffe können für den Stützring Kunststoffe, Kunstharze, Keramiken und Metalle eingesetzt werden. Durch das 3D-Drucken des Stützrings kann dieser in seiner Formgebung bzw. seinem Stützverhalten auf einfache Weise an lokal unterschiedliche Anforderungen während des Betriebseinsatzes des Dichtrings ausgelegt werden. Selbst filigrane Strukturen des Stützrings können bei dem im Wege des 3D-Drucks erzeugten Stützrings zuverlässig und mit geringem Kostenaufwand realisiert werden.

Als 3D-Druckverfahren kann insbesondere das sogenannte selektive Lasersintern erreicht werden. Bei diesem 3D-Druckverfahren wird der Stützring durch ein schichtweises lokales Verschmelzen von pulverförmigem Material mittels selektiver Laserstrahlung aufgebaut. Hierzu kann insbesondere PEEK (Polyetherketon) eingesetzt werden, das eine sehr hohe Genauigkeit bzw. räumliche Auflösung, Präzision und Hochtemperaturbelastbarkeit des Stützrings mit einer Dauergebrauchstemperatur von 260° Celsius ermöglicht.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden.

Die Erfindung wird nachstehend anhand von in der Zeichnung gezeigten Ausführungsbeispielen näher erläutert. Die gezeigten und beschriebenen Ausführungsformen sind dabei nicht als abschließende Aufzählung zu verstehen, sondern haben vielmehr beispielhaften Charakter für die Schilderung der Erfindung.

In der Zeichnung zeigen:
- Fig. 1: einen Dichtring mit einem Grundkörper aus Polymermaterial und mit einem im Polymermaterial integrierten Stützring, in einer Seitenansicht;
- Fig. 2: den Dichtring gemäß Fig. 1 in einer geschnittenen perspektivischen Darstellung;
- Fig. 3: den Stützring des Dichtrings aus Fig. 2 in einer freigestellten Ansicht;
- Fig. 4: ein alternatives Ausführungsbeispiel des Stützrings des Dichtrings aus Fig. 2 in einer freigestellten Ansicht;
- Fig. 5: ein weiteres alternatives Ausführungsbeispiel des Stützrings des Dichtrings aus Fig. 2 in einer freigestellten Ansicht;
- Fig. 6: einen Dichtring, bei dem der integrierte Stützring zusätzliche Stützstrukturen aufweist, in einer geschnittenen perspektivischen Teilansicht;
- Fig. 7: einen Dichtring mit einer durch den Stützring armierten Abstreiflippe, in einem geschnittenen perspektivischen Teilausschnitt;
- Fig. 8: den Stützring gemäß Fig. 7 in einem freigestellten perspektivischen Teilausschnitt;
- Fig. 9: eine alternative Ausführungsform des in Fig. 7 gezeigten Stützrings;
- Fig. 10: einen Dichtring, bei dem der Stützring mehrere Strömungskanäle bildet, die einer Druckentlastung dienen können;
- Fig. 11: einen weiteren Dichtring, bei dem der Stützring zumindest abschnittsweise eine kreuzförmige Querschnittsform aufweist;
- Fig. 12: den Stützring gemäß Fig. 11 in einer freigestellten und geschnittenen perspektivischen Teilansicht;
- Fig. 13: den Stützring gemäß Fig. 11 in einer freigestellten und an anderer Stelle geschnittenen perspektivischen Teilansicht;
- Fig. 14: einen Dichtring, bei dem der Stützring zusätzlich einer Befestigung des Dichtrings in einer Haltenut oder dergleichen dient, in einer geschnittenen perspektivischen Ansicht;
- Fig. 15: den Stützring gemäß Fig. 14 in einer freigestellten perspektivischen Teilansicht;
- Fig. 16: einen Dichtring mit einem zweiteilig aufgebauten Stützring, in einer geschnittenen perspektivischen Teilansicht;
- Fig. 17: den Stützring des Dichtrings gemäß Fig. 16 in einer freigestellten perspektivischen Teilansicht;
- Fig. 18: einen Dichtring mit einem auf Stütz- und Führungsfunktion optimiertem Stützring, in einem geschnittenen perspektivischen Teilausschnitt;
- Fig. 19: den Stützring des Dichtrings gemäß Fig. 19 in einer freigestellten perspektivischen Teilansicht;
- Fig. 20A: einen Stützring, der eine Vielzahl von gelenkig verbundenen Profilstegen umfasst;
- Fig. 20B: einen Dichtring mit dem in Fig. 20a gezeigten Stützring in einer teiltransparenten Darstellung; und
- Fig. 20C: den Dichtring gemäß 20B in einer geschnittenen Darstellung.

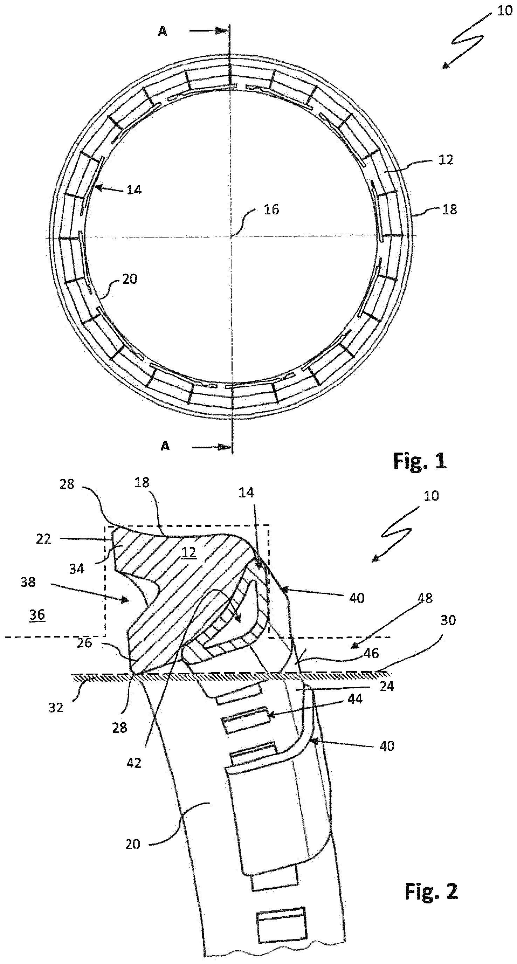

In **Fig. 1** ist ein Dichtring **10** gezeigt, der ein elastisch verformbares Polymermaterial **12** und einen Stützring **14** umfasst, der im Polymermaterial 12 abschnittsweise eingebettet ist. Der Dichtring 10 kann beispielsweise als ein Radialwellendichtring oder als eine Kolben- bzw. Stangendichtring ausgeführt sein. Der Dichtring 10 ist hier bezüglich seiner mit **16** bezeichneten Mittelachse beispielshaft in radialer Richtung innendichtend ausgeführt. Der Dichtring 10 weist eine in radialer Richtung äußere Umfangsseite **18** und eine in radialer Richtung innere Umfangsseite **20** auf. Das Polymermaterial 12 des Dichtrings 10 kann zähelastisch oder aber auch gummielastisch verformbar sein. Im erstgenannten Fall kann das Polymermaterial 12 beispielsweise Polyurethan (PU) oder ein anderes dem Fachmann geläufiges zähelastisches Polymermaterial sein. Als gummielastisch verformbare Materialien können Gummi oder andere bekannte Elastomere, beispielsweise Ethylen-Propylen-Dien-Kautschuk (EPDM), eingesetzt werden.

Der Stützring 14 ist als ein 3D-Druckteil mit einem schichtweisen Materialaufbau ausgeführt. Das Material des Stützrings 14 weist ein größeres Modul auf, als das Polymermaterial 12. Das Polymermaterial 12 ist am Stützring 14 angespritzt. Hierbei ist zu beachten, dass das Polymermaterial 12 einen niedrigeren Schmelzpunkt aufweist, als das Material des Stützrings 14. Der Stützring kann insbesondere aus PEEK (Polyetheretherketon) bestehen.

**Fig. 2** zeigt den Dichtring 10 gemäß Fig. 1 in einem ausschnittsweisen Querschnitt entlang der in Fig. 1 mit A-A bezeichneten Schnittebene. Der Dichtring 10 weist eine insgesamt U-förmige Querschnittform auf. Eine erste und eine zweite Stirnseite des Dichtrings sind mit **22** und **24** bezeichnet. Am Dichtring ist eine dynamische Dichtlippe **26** mit einer Dichtkante **28** angeformt. Die Dichtkante 28 liegt im Betriebseinsatz des Dichtrings 10 an einer in der Figur 2 mit gestrichelter Linie gezeigten Gegenlauf- bzw. Dichtfläche **30** eines ersten Maschinenelement **32** dynamisch dichtend an. Der Dichtring 10 kann mit einem statisch dichtenden Dichtabschnitt bzw. einer statischen Dichtlippe **34** versehen sein, der/die im Betriebseinsatz an einem die Dichtung 10 haltenden zweiten Maschinenelement **36** statisch dichtend anliegt.

Zwischen den beiden Dichtlippen 26, 34 ist hier eine Nut **38** ausgebildet, um eine Druckaktivierung der dynamisch dichtenden Dichtlippe 26 und hier zusätzlich auch der statisch dichtenden Dichtlippe 34 zu ermöglichen.

Der Stützring 14 weist erste Ringsegmente **40** auf, die in Umfangsrichtung des Dichtrings 10 bzw. des Stützrings 14 voneinander, bevorzugt regelmäßig, beabstandet angeordnet sind. Die ersten Ringsegmente 40 sind formstabil ausgeführt. Durch die im Betriebseinsatz am Dichtring angreifenden Kräfte ist mithin keine wesentliche Verformung der ersten Ringsegmente 40 bewirkt. Diese ersten Ringsegmente 40 können gemäß Fig. 2 beispielsweise eine dreieckige Querschnittsform aufweisen. Für eine mechanisch belastbare Verbindung des Polymermaterials 12 mit dem Stützring 14 können die ersten Ringsegmente 40 jeweils mit einer Durchgangsausnehmung **42** versehen sein. Die Durchgangsausnehmungen 42 erstrecken sich dabei bevorzugt in Umfangsrichtung des Dichtrings 10 durch das jeweilige erste Ringsegment 40 hindurch. Das Polymermaterial 12 kann in die Durchgangsausnehmungen 42 eingreifen und diese teilweise oder vorteilhaft vollständig ausfüllen.

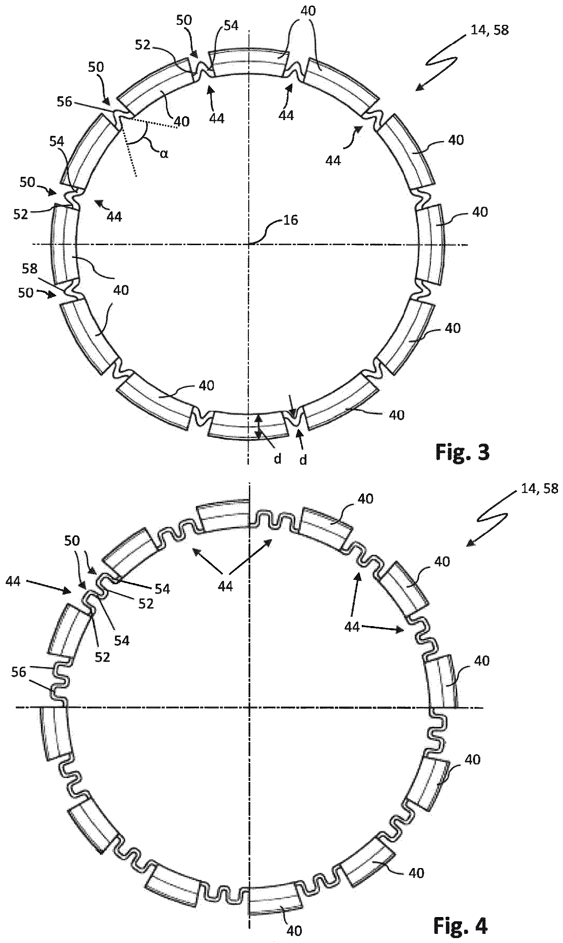

Die ersten Ringsegmente sind untereinander über zweite Ringsegmente **44** miteinander gelenkig verbunden, wie dies nachstehend im Zusammenhang mit den Figuren 3 bis 5 näher erläutert ist.

Gemäß Fig. 2 kann der Stützring 14 an einer oder mehreren Seiten des Dichtrings 10 zumindest abschnittsweise die Oberfläche **46** des Dichtrings 10 bilden. Der Stützring 14 begrenzt somit abschnittsweise den Dichtring 10 nach außen. Mit anderen Worten ist der Stützring 14 abschnittsweise freiliegend, d.h. nicht vom Polymermaterial 12 überdeckt. Bei dem in Fig. 2 gezeigten Ausführungsbeispiel ist dies im Bereich der radial innenliegenden Umfangsseite 20 und der im Betriebszustand des Dichtrings 10 niederdruckseitig anzuordnenden zweiten Stirnseite 24 des Dichtrings 10 der Fall.

Die ersten Ringsegmente 40 können dabei das Polymermaterial nach außen überragen. Gemäß Fig. 2 überragen die ersten Ringsegmente 40das Polymermaterial 12 an der radial inneren Umfangsseite 20 des Dichtrings 10 in radialer Richtung nach innen. Im Bereich der zweiten Stirnseite 24 stehen die ersten Ringsegmente 40 in einer axialen Richtung über das Polymermaterial nach außen hervor. Dadurch kann der Stützring 14 einerseits eine wirksame Führung des Dichtrings 10 an einer der radial innenliegenden Umfangsseite 20 zuweisenden dynamischen Dichtfläche 30 des ersten Maschinenelements ermöglichen. Einer mechanischen Überbelastung des Polymermaterials 12 des Dichtrings, insbesondere im Bereich der dynamischen Dichtlippe 26, kann dadurch entgegengewirkt werden. Darüber hinaus kann der Stützring 14 Schutz vor einer unerwünschten Extrusion des Polymermaterials 12 in einen zwischen den gegeneinander abzudichtenden Maschinenelementen 32, 36 angeordneten Dichtspalt **48** bieten.

In **Fig.** 3 ist eine Ausführungsform des Stützring 14 des in Fig. 1 gezeigten Dichtrings 10 in einer freigestellten Seitenansicht gezeigt. Die zweiten Ringsegmente 44 weisen zumindest ein Profilschenkelpaar **50** mit einem ersten und einem zweiten Profilschenkel **52, 54** auf. Die beiden Profilschenkel 52, 54 sind zueinander schräg verlaufend angeordnet und schließen gemeinsam einen spitzen Winkel **α** ein. Die Profilschenkel 52, 54 sind über einen Rückenabschnitt **56** miteinander verbunden. Insgesamt weisen die zweiten Ringsegmente 44 dadurch bei dem in Fig. 3 gezeigten Ausführungsbeispiel eine V-Form auf. Die zweiten Ringabschnitte 44 sind beidenends jeweils mit einem der ersten Ringabschnitte 40 verbunden. Die zweiten Ringabschnitte 44 des Stützrings weisen eine kleinere Dicke **d** auf, als die ersten Ringsegmente 40. Die zweiten Ringsegmente 44 stellen mithin materialgeschwächte Ringabschnitte des Stützrings 14 dar. Die beiden Profilschenkel 52, 54 der zweiten Ringabschnitte 44 sind jeweils gegen ein dem Material des Stützrings 14 innewohnendes elastisches Rückstellvermögen aufspreizbar. Dadurch weist der Stützring 14 zugleich die Funktion eines Vorspannrings bzw. Vorspannelements **58** auf, durch das das Polymermaterial 12, hier insbesondere die dynamische Dichtlippe 26 mit ihrer Dichtkante 28 in radialer Richtung gegen die vorstehend genannte Dichtfläche 30 (Fig. 2) eines Maschinenelements 32 gespannt werden kann. Der Stützring 14 und damit der Dichtring 10 sind somit insgesamt in radialer Richtung elastisch aufweitbar oder unrund verformbar.

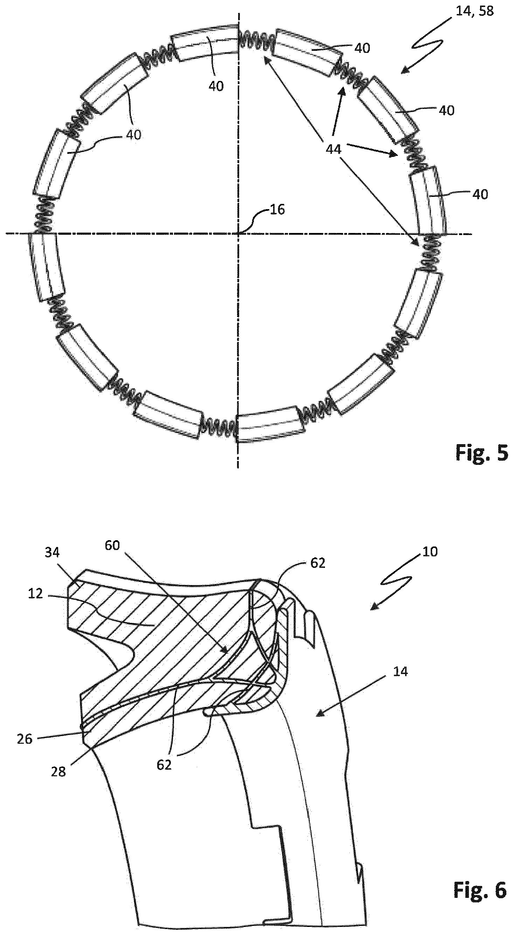

Die zweiten Ringabschnitte 44 des Stützrings 14 können auch jeweils mehrere Profilschenkelpaare 50 aufweisen, die in Umfangsrichtung hintereinander aufgereiht angeordnet und End-zu-End miteinander stoffschlüssig verbunden sind, wie dies in den **Fign. 4** und **5** gezeigt ist. Die beiden Profilschenkel 52, 54 eines Profilschenkelpaars können im unbelasteten Zustand des Stützrings 14 auch zueinander im Wesentlichen parallel verlaufend angeordnet sein. Im unbelasteten Zustand des Stützrings 14 sind die Profilschenkelpaare 50 und der jeweils zugeordnete Rückenabschnitt mithin U-förmig oder spiralfederförmig (Fig. 5) angeordnet.

Durch den segmentierten Aufbau des Stützrings 14 fungiert dieser als ein Segmentspannring, durch den in Umfangsrichtung des Dichtrings 10 ein variabler Kontaktpressungsverlauf der Dichtlippe 26 gegen die dynamische Dichtfläche 30 erreicht werden kann. So kann die Dichtlippe 26 im Bereich der ersten (biegesteifen) Ringsegmente 40 des Stützrings 14 stärker gegen die Dichtfläche 30 vorgespannt werden, als in den Bereichen der zweiten Ringsegmente 44. Insgesamt kann dadurch die Schmierung des Kontaktflächenbereichs zwischen der Dichtlippe bzw. der dynamisch dichtenden Dichtkante 26 und der Dichtfläche 30 verbessert werden.

Der Stützring 14 kann zusätzliche Stützstrukturen **60** aufweisen, wie dies bei dem in **Fig.** 6 gezeigten Ausführungsbeispiel eines Dichtrings 10 gezeigt ist. Die Stützstrukturen 60 können beispielsweise einen oder mehrere Stützfortsätze **62** aufweisen, die sich in die dynamische Dichtlippe 26 des Dichtrings 10 hineinerstrecken. Die Stützfortsätze 62 sind bevorzugt an einem oder mehreren der ersten Ringsegmente 40 des Stützrings angeformt. Zu beachten ist, dass sich die Stützfortsätze 62 bei dem hier als Radial(wellen)dichtring ausgebildeten Dichtring 10 in axialer Richtung bis auf Höhe der Dichtkante 28 der dynamischen Dichtlippe 26 bzw. in axialer Richtung über die Dichtkante 26 hinaus erstrecken können. Dadurch, dass der Stützring 14 des Dichtrings 10 als 3D-Druckteil ausgeführt ist, können die Stützstrukturen 60 insgesamt im Sinne eines ggf. engmaschig, vernetzten Gerüsts ausgeführt sein, wobei beispielswiese die ersten und zweiten Ringabschnitte 40, 44 bzw. die Stützstrukturen 60 zumindest teilweise entlang der wichtigsten Belastungslinien (Spannungstrajektorien) des Dichtrings angeordnet sind. Die Architektur des Stützrings 14 ist dabei darauf ausgelegt, ob der jeweilige Dichtringabschnitt bzw. das Dichtringteilvolumen im Betriebseinsatz überwiegend Druck oder aber Biege- und Torsionskräften ausgesetzt ist. Dieses Leichtbauprinzip ermöglicht einen minimierten Materialeinsatz für den Stützkörper 14 bei ausreichend hoher Stabilität und damit eine kostengünstige Fertigung des Dichtrings 10 insgesamt. Durch den konstruktiven Aufbau des Dichtrings 10 kann zudem während des Betriebseinsatzes eine verbesserte Wärmeabfuhr aus dem Dichtring 10 realisiert werden.

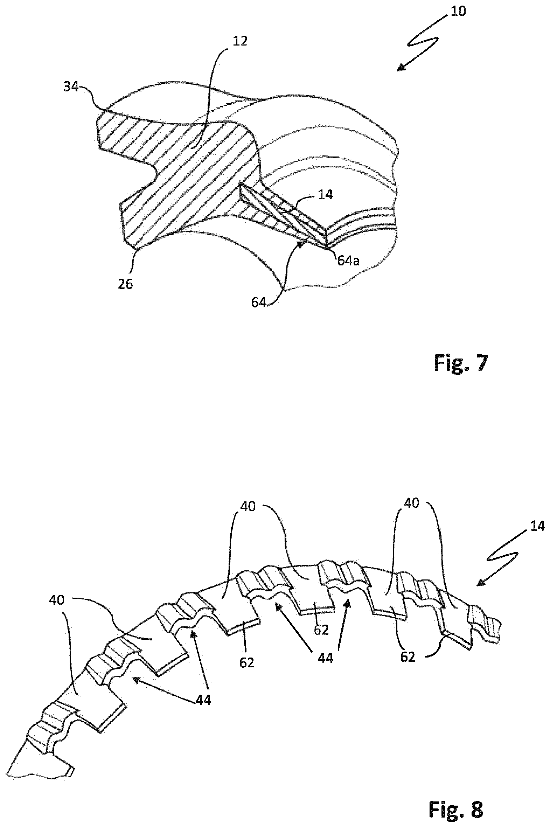

In **Figur 7** ist ein weiteres Ausführungsbeispiel eines Dichtrings mit 3D-Druck-Stützring gezeigt. Der Stützring ist in **Fig. 8** in einem freigestellten Detailausschnitt gezeigt. Die ersten formstabilen Ringsegmente 40 sind hier jeweils aus Vollmaterial gebildet. An den ersten Ringsegmenten 40 ist jeweils ein zungenartiger Stützfortsatz 62 angeformt, der sich von dem jeweiligen ersten Ringsegment 40 - hier in axialer Richtung - in eine Abstreiflippe **64** des Dichtrings 10 hineinerstreckt. Die Abstreiflippe weist eine Abstreifkante 64a auf, die zur Anlage an der (dynamischen) Dichtfläche des ersten Maschinenteils (vgl. Fig. 2) vorgesehen ist. Diese Abstreiflippe 64 ist zur dynamischen Dichtlippe 26 des Dichtrings 10 separat ausgebildet. Der Stützfortsatz 62 ist hier aus Vollmaterial gebildet.

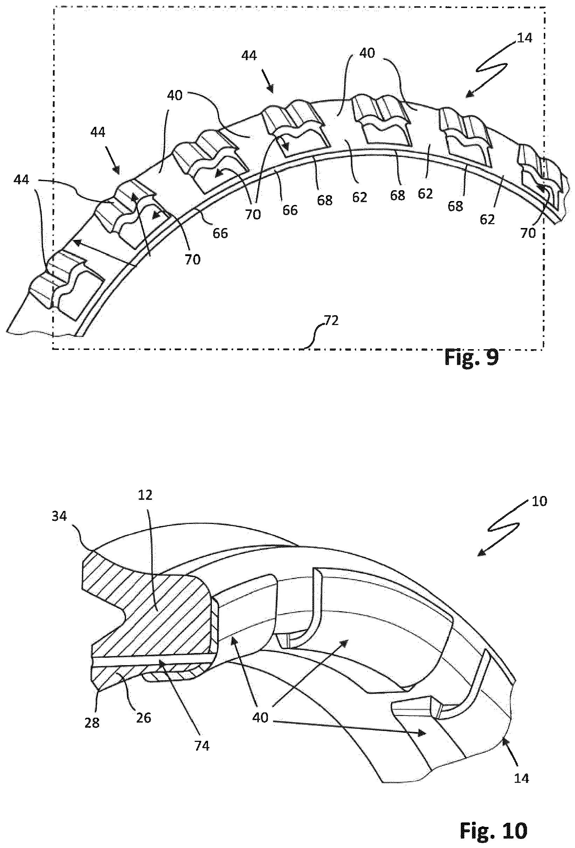

In **Fig. 9** ist ein weiterer Stützring 14 gezeigt, wie dieser beispielsweise bei dem in Fig. 7 gezeigten Dichtring 10 eingesetzt werden kann. Die zungenartigen Stützfortsätze 62 sind hier im Bereich ihrer freien Enden **66** zusätzlich über Verbindungsstege **68** miteinander verbunden. Dadurch sind zwischen den zweiten Ringsegmenten 44 und den Verbindungsstegen 68 Öffnungen **70** für das Polymermaterial 12 (vgl. Fig.1) gebildet. Bei dieser Ausführungsform ist der Stützring 14 im Wesentlichen nur in der durch seine ersten Ringsegmente 44 aufgespannten Ebene **72** elastisch aufweitbar. Dadurch kann die Kontaktpressung der Abstreiflippe 64 des Dichtrings 10 gegen die zugeordnete Dichtfläche (Gegenlauffläche) 30 (Fig.3) weitgehend unabhängig von einer Kontaktpressung der dynamischen Dichtlippe 26 gegen die Dichtfläche 30 eingestellt werden. Die Fähigkeit der dynamischen Dichtlippe 26 zu radial gerichteten Ausgleichbewegungen bei exzentrischer Belastung kann dadurch erhalten werden. Infolgedessen kann einer unerwünschten mechanischen Überbeanspruchung der dynamischen Dichtlippe 26 im Betriebseinsatz zuverlässig entgegengewirkt werden.

Der Stützring 14 kann gemäß dem in **Fig. 10** gezeigten Ausführungsbeispiel zumindest einen Fluidkanal **74** aufweisen bzw. bilden. Der Fluidkanal 74 ist hier axial verlaufend angeordnet. Im Betriebseinsatz des Dichtrings 14 kann dadurch beispielsweise eine Niederdruckseite des Dichtrings 10 mit einer Hochdruckseite des Dichtrings 10 fluidisch verbunden werden. Im Falle einer sogenannten Druckumkehr kann so ein Druckausgleich zwischen der Hochdruckseite und der Niederdruckseite ermöglicht werden.

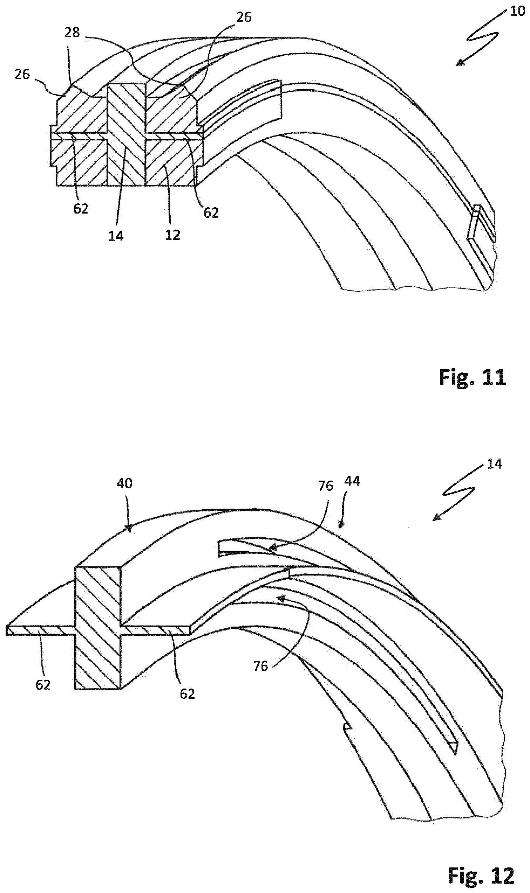

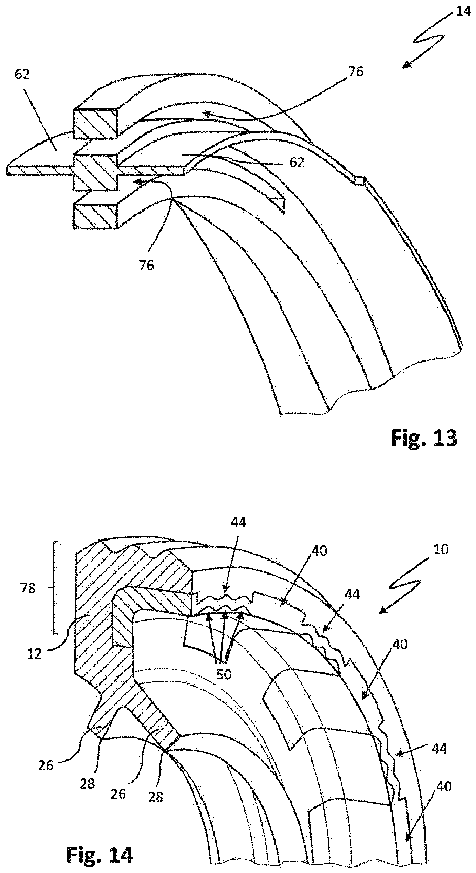

In **Figur 11** ist ein weiterer Dichtring 10 mit einem integrierten Stützring in Form eines 3D-Druck-Bauteils gezeigt. Der Stützring 14 ist in den **Figuren 12** und **13** jeweils in einer freigestellten Ansicht und in unterschiedlichen Schnittdarstellungen gezeigt. Der Dichtring 10 ist hier beispielhaft in radialer Richtung außendichtend ausgeführt. Der Dichtring 10 weist außenumfangsseitig zwei dynamische Dichtlippen 26 mit jeweils einer Dichtkante 28 auf. Die Dichtlippen 26 sind auch hier durch das Polymermaterial 12 gebildet. Der Stützring 14 weist gemäß den Fign. 12 und 13 erste Ringsegmente 40 und zweite Ringsegmente 44 mit daran angeformten flügelartigen Stützfortsätzen **62** auf. Die zweiten Ringsegmente 44 sind mit axial verlaufend angeordneten Durchgangsschlitzen **76** versehen, die vom Polymermaterial 12 des Dichtrings 10 durchsetzt bzw. durchgriffen sind. Die flügelartigen Stützfortsätze 62 können eine zum Polymermaterial 12 entsprechende stirnseitige gestufte Kontur aufweisen und so beispielsweise mit dem Polymermaterial 12 Vorsprünge ausbilden, durch die eine Fluidpassage zwischen dem Dichtring 10 und einem Maschinenelement (nicht gezeigt) ermöglicht ist.

Der Stützring 14 kann sich gemäß Fig. 11 in radialer Richtung zwischen die beiden Dichtlippen 26 erstrecken und so einer Führung und Abstützung des Dichtrings 10 an einer zugeordneten dynamischen Dichtfläche 30 (vgl. Fig. 3) eines Maschinenelements dienen (nicht gezeigt).

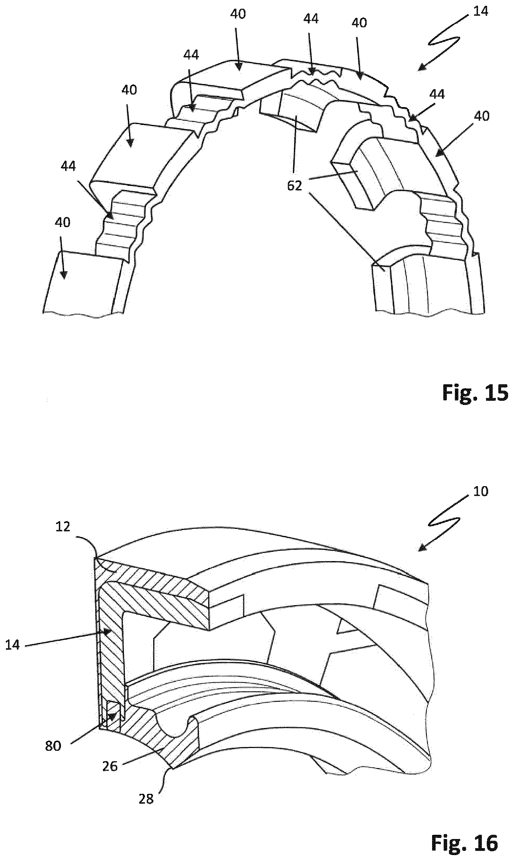

Der Stützring 14 kann weiterhin als Einbauhilfe bzw. als Fixierhilfe für den Dichtring 10 ausgebildet sein. So können die ersten Ringsegmente 40 gemäß den **Fign. 14** und **15** eine abgewinkelte, insbesondere L-förmige Grundform aufweisen, durch die der Dichtring 10 im Bereich seines Halteabschnitts **78** in einer Haltenut eines Maschinenelements (vgl. Fig. 2) festsetzbar ist. Der Dichtring kann gemäß Fig. 15 zwei in radialer Richtung innendichtende Dichtlippen 26 aufweisen, die der dynamischen Abdichtung einer Dichtfläche eines anderen Maschinenelements dienen.

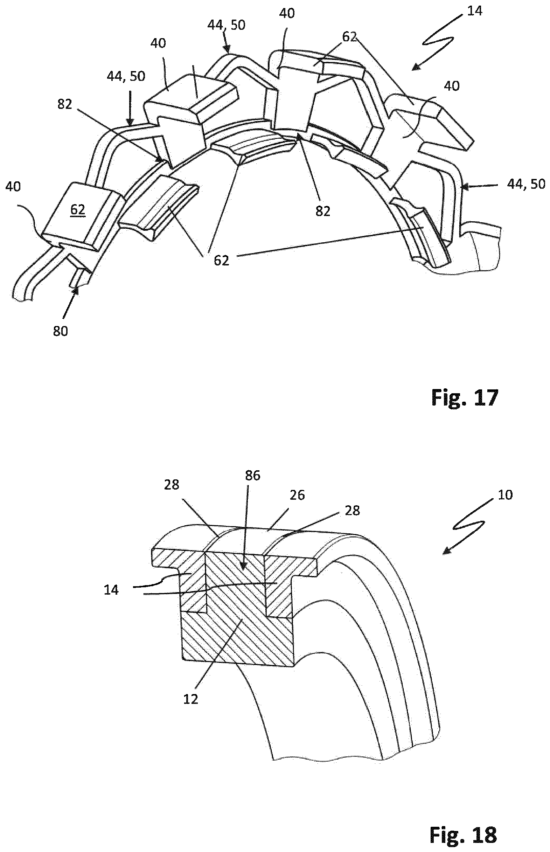

In **Fig. 16** ist ein weiterer Dichtring 10 gezeigt, bei dem am Stützring 14 ein zusätzlicher Stütz- bzw. Aussteifungsring **80** angeordnet ist. Der Stützring 14 weist eine im Wesentlichen L-förmige Querschnittsform auf und dient der Fixierung des Dichtrings 10 in einer Haltenut eines Maschinenelements sowie der Aussteifung des Polymermaterials 12. Die ersten und zweiten Ringsegmente 40, 44 sind gut zu erkennen. Die ersten Ringsegmente 40 bzw. deren zungenartigen Stützfortsätze 62 weisen gemäß der freigestellten Darstellung des Stützrings 14 sowie des Aussteifungsrings 80 in **Fig. 17** Aufnahmen **82** auf, in denen der Aussteifungsring 80 gehalten ist. Der Aussteifungsring 80 kann in die Aufnahmen 82 des Stützrings 14 eingeklipst oder eingepresst sein.

Der Aussteifungsring 80 ist ringförmig geschlossen ausgeführt und weist zungenartige Stützfortsätze 62 auf, die sich in die Dichtlippe 26 des Dichtrings hineinerstrecken. Die Stützfortsätze 62 sind hier in Umfangsrichtung des Dichtrings 10 voneinander jeweils beabstandet angeordnet. Die Stützfortsätze 62 können über Verbindungsstege (vgl. Fig. 9) miteinander verbunden sein.

Auch der Aussteifungsring 80 ist vorteilhaft als ein 3D-Druckteil ausgeführt und weisen dementsprechend einen in der Zeichnung nicht näher dargestellten schichtweisen Aufbau auf.

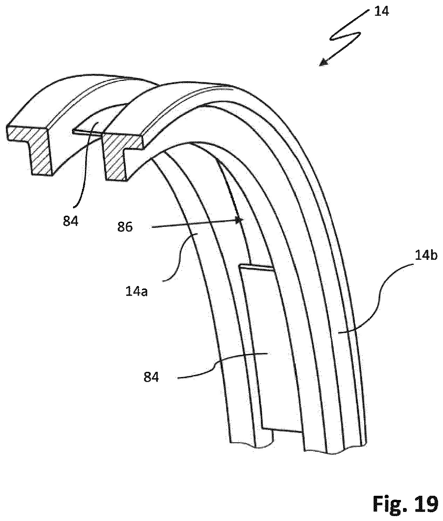

In **Figur 18** ist ein weiterer Dichtring 10 gezeigt, bei dem der Stützring 14, der in **Fig. 19** in einem freigestellten Detailausschnitt gezeigt ist, zwei zueinander parallel verlaufende und voneinander beabstandet angeordnete Ringhälften 14a, 14b aufweist. Der Stützring ist einstückig ausgeführt. Hierzu sind die beiden Ringhälften 14a, 14b über Brücken- oder Verbindungssegmente **84** miteinander verbunden. Die Verbindungssegmente 84 sind an beiden Ringhälften angeformt. Die Verbindungssegmente 84 sind in Umfangsrichtung des Stützrings 14 voneinander beabstandet angeordnet. Die beiden Ringhälften 14a, 14b können jeweils eine L-förmigen Querschnittsform aufweisen. Das Polymermaterial durchgreift den zwischen den beiden Ringhälften angeordneten Spalt **86.**

Der Stützring 14 der vorstehend erläuterten Dichtringe 10 bzw. auch der Aussteifungsring 80 können ganz oder teilweise eine geriffelte bzw. eine mit Nuten bzw. Kerben versehene Oberflächenstruktur aufweisen, um einen nochmals weiter verbesserten Haft- bzw. Formverbund mit dem Polymermaterial 12 des Dichtrings 10 zu ermöglichen.

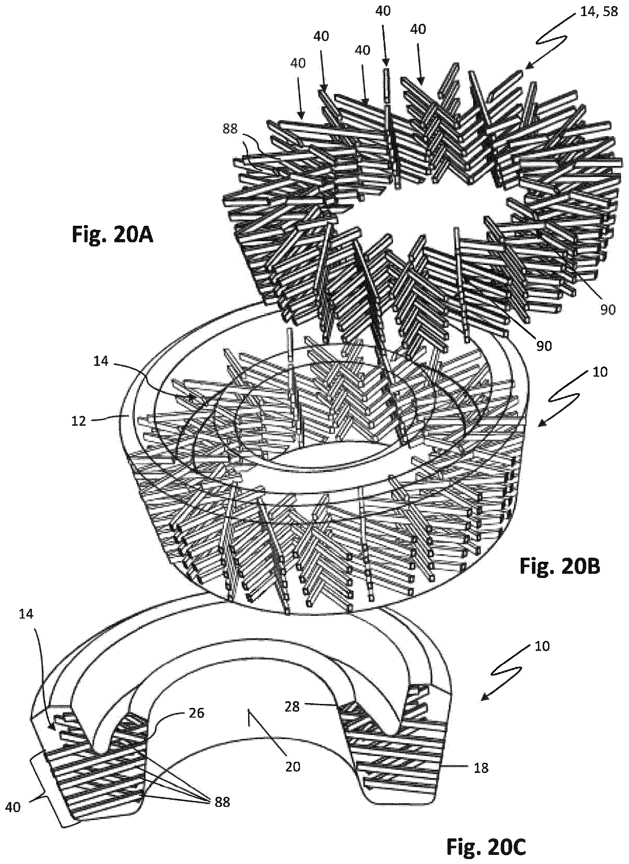

In den **Figuren 20** ist eine sehr spezielle Ausführungsform eines Dichtrings 10 gezeigt. Der Dichtring 10 ist in Fig. 20b in einer perspektivischen Ansicht und in Fig. 20C in einer geschnittenen Ansicht gezeigt. Fig. 20A zeigt den Stützring 14 des Dichtrings 10 in einer freigestellten perspektivischen Ansicht. Der Stützring 14 weist formstabile erste Ringsegmente 40 auf, die jeweils durch eine Vielzahl an Profilstegen **88** gebildet sind, die in Richtung der Mittelachse 16 des Dichtrings 10 voneinander beabstandet hintereinanderliegend (übereinanderliegend) angeordnet sind. Zumindest ein Teil der Profilstege 88 jeweils zweier unmittelbar benachbart angeordneter erster Ringsegmente 40 kämmen wechselweise miteinander und sind zumindest teilweise im Bereich ihrer jeweiligen Kreuzungspunkte **90** miteinander verbunden. Der Stützring 14 und somit der gesamte Dichtring 10 sind dadurch in einer zur Mittelachse 16 radialen Richtung federelastisch aufweitbar. Der Stützring 14 kann dadurch auch hier einer elastisch vorgespannten Anlage der dynamischen Dichtlippe 26 des Dichtrings 10 an einer zugeordneten Dichtfläche eines Maschinenelements (vgl. Fig. 2) dienen. Die Profilstege 88 des Stützrings 14 können sich zumindest abschnittsweise bis zur Außenseite des Dichtrings 10 erstrecken. Dies ist hier im Bereich der radial inneren und der radial äußeren Umfangsseite 20, 18 des Dichtrings 10 der Fall. Bei der in den Fign. 20 gezeigten Ausführungsform eines Stützrings 14 wird nicht zuletzt aufgrund der mit dem Polymermaterial 12 benetzbaren und umschlossenen großen Oberfläche des Stützrings ein besonders dauerhafter Haft- bzw. Formverbund des Stützrings 14 mit dem Polymermaterial 12 erreicht.

## Patentansprüche

1. Dichtring (10) zum Abdichten eines zwischen zwei Maschinenelementen (32, 36) angeordneten Dichtspalts (48), umfassend ein elastisch verformbares Polymermaterial (12) und einen Stützring (14), der zumindest abschnittsweise in dem Polymermaterial (12) formschlüssig eingebettet ist, wobei der Stützring (14) als ein 3D-Druckteil mit einem zumindest abschnittsweise mehrschichtigen Aufbau seines Materials ausgeführt ist und wobei das Material des Stützrings (14) ein größeres Elastizitätsmodul aufweist, als das Polymermaterial (12), **dadurch gekennzeichnet, dass** der Stützring (14) in einer zur Mittelachse (16) des Dichtrings (10) radialen Richtung elastisch aufweitbar ist und formstabile erste Ringsegmente (40) aufweist, die in Umfangsrichtung des Dichtrings (10) gelenkig miteinander verbunden sind.

2. Dichtring nach Anspruch 1, **dadurch gekennzeichnet, dass** das Polymermaterial (12) am Stützring (14) angespritzt ist.

3. Dichtring nach Anspruch 1 oder 2, **dadurch gekennzeichnet, dass** das Polymermaterial (12) des Dichtrings (10) einen niedrigeren Schmelzpunkt aufweist, als das Material des Stützrings (14).

4. Dichtring nach Anspruch 1, **dadurch gekennzeichnet, dass** die ersten Ringsegmente (40) jeweils durch mehrere Profilstege (88) gebildet sind, die in Richtung der Mittelachse (16) des Dichtrings (10) voneinander beabstandet hintereinanderliegend angeordnet sind, wobei die Profilstege (88) jeweils zweier unmittelbar benachbart angeordneter erster Ringsegmente (40) wechselweise miteinander kämmen und im Bereich ihrer Kreuzungspunkte (90) gelenkig miteinander verbunden sind.

5. Dichtring nach Anspruch 1, **dadurch gekennzeichnet, dass** die ersten Ringsegmente (40) in Umfangsrichtung des Dichtrings (10) voneinander beabstandet angeordnet und jeweils über ein zweites Ringsegment (44) miteinander verbunden sind, das zumindest abschnittsweise elastisch verformbar ist.

6. Dichtring nach Anspruch 5, **dadurch gekennzeichnet, dass** die zweiten Ringsegmente (44) jeweils zumindest ein Profilschenkelpaar (50) mit einem ersten und einem zweiten Profilschenkel (52, 54) aufweisen, die über einen Rückenabschnitt (56) miteinander verbunden sind und die relativ zueinander elastisch aufspreizbar sind.

7. Dichtring nach Anspruch 6, **dadurch gekennzeichnet, dass** zumindest ein Teil der zweiten Ringsegmente (44) mehrere Profilschenkelpaare (50) umfasst, die in Umfangsrichtung hintereinander aufgereiht angeordnet und End-zu-End miteinander stoffschlüssig verbunden sind.

8. Dichtring nach einem der vorhergehenden Ansprüche, **dadurch gekennzeichnet, dass** die Oberfläche (46) des Dichtrings (10) zumindest abschnittsweise durch den Stützring (14) gebildet ist.

9. Dichtring nach Anspruch 8, **dadurch gekennzeichnet, dass** der Stützring (14) über einen durch das Polymermaterial (12) gebildeten Oberflächenabschnitt des Dichtrings (10) hervorsteht.

10. Dichtring nach einem der vorhergehenden Ansprüche, **dadurch gekennzeichnet, dass** der Stützring (14) zumindest abschnittsweise einen axial verlaufend angeordneten Fluidkanal (74) oder mehrere solcher Fluidkanäle (74) bildet.

11. Dichtring nach einem der vorhergehenden Ansprüche, **dadurch gekennzeichnet, dass** der Dichtring (10) eine Dichtlippe (26) mit einer dynamischen Dichtkante (28) aufweist, wobei der Stützring (14) zumindest abschnittsweise innerhalb der Dichtlippe (26) angeordnet ist.

12. Dichtring nach Anspruch 11, **dadurch gekennzeichnet, dass** sich der Stützring (14) abschnittsweise oder umlaufend in die Dichtlippe (26) hineinerstreckt.

13. Dichtring nach einem der vorhergehenden Ansprüche, **dadurch gekennzeichnet, dass** der Stützring (14) mit axial oder radial verlaufend angeordneten Durchgangsausnehmungen (42) versehen ist, wobei sich das Polymermaterial in die Durchgangsausnehmungen (42) hineinerstreckt.

## Claims

1. Sealing ring (10) for sealing a sealing gap (48) arranged between two machine elements (32, 36), the sealing ring comprising an elastically deformable polymer material (12) and a support ring (14) which is form-fittingly embedded in the polymer material (12) at least in part, the support ring (14) being designed as a 3D printed part having an at least partially multilayered structure of its material, and the material of the support ring (14) having a greater modulus of elasticity than the polymer material (12), **characterized in that** the support ring (14) can be elastically widened in a radial direction with respect to the central axis (16) of the sealing ring (10) and has dimensionally stable first ring segments (40) which are hingedly connected to one another in the circumferential direction of the sealing ring (10).

2. Sealing ring according to claim 1, **characterized in that** the polymer material (12) is injection-molded onto the support ring (14).

3. Sealing ring according to either claim 1 or claim 2, **characterized in that** the polymer material (12) of the sealing ring (10) has a lower melting point than the material of the support ring (14).

4. Sealing ring according to claim 1, **characterized in that** the first ring segments (40) are each formed by a plurality of profile ribs (88) which are arranged one behind the other, at a distance from one another, in the direction of the central axis (16) of the sealing ring (10), the profile ribs (88) of each two immediately adjacent first ring segments (40) alternately meshing with one another and being hingedly connected to one another in the region of their crossing points (90).

5. Sealing ring according to claim 1, **characterized in that** the first ring segments (40) are arranged at a distance from one another in the circumferential direction of the sealing ring (10) and are each connected to one another via a second ring segment (44) which is at least partially elastically deformable.

6. Sealing ring according to claim 5, **characterized in that** the second ring segments (44) each have at least one profile leg pair (50) having a first and a second profile leg (52, 54), which are connected to one another via a back portion (56) and can be elastically spread apart relative to one another.

7. Sealing ring according to claim 6, **characterized in that** at least some of the second ring segments (44) comprise a plurality of profile leg pairs (50) which are arranged in a row one behind the other in the circumferential direction and are integrally bonded to one another end to end.

8. Sealing ring according to any of the preceding claims, **characterized in that** the surface (46) of the sealing ring (10) is formed at least in part by the support ring (14).

9. Sealing ring according to claim 8, **characterized in that** the support ring (14) protrudes over a surface portion of the sealing ring (10) that is formed by the polymer material (12).

10. Sealing ring according to any of the preceding claims, **characterized in that** the support ring (14) forms, at least in part, a fluid channel (74) arranged so as to extend axially or a plurality of such fluid channels (74).

11. Sealing ring according to any of the preceding claims, **characterized in that** the sealing ring (10) has a sealing lip (26) comprising a dynamic sealing edge (28), the support ring (14) being arranged within the sealing lip (26) at least in part.

12. Sealing ring according to claim 11, **characterized in that** the support ring (14) extends in part or circumferentially into the sealing lip (26).

13. Sealing ring according to any of the preceding claims, **characterized in that** the support ring (14) is provided with through-bores (42) arranged so as to extend axially or radially, the polymer material extending into the through-bores (42).

## Revendications

1. Bague d'étanchéité (10) pour l'étanchéification d'un intervalle d'étanchéité (48) agencé entre deux éléments de machine (32, 36), comprenant un matériau polymère (12) déformable de manière élastique et une bague d'appui (14), qui est, au moins en sections, incorporée par accouplement de forme dans le matériau polymère (12), la bague d'appui (14) étant réalisée sous la forme d'une pièce imprimée en 3D avec une structure de son matériau qui est multicouche au moins en sections, et le matériau de la bague d'appui (14) présentant un module d'élasticité supérieur au matériau polymère (12), **caractérisée en ce que** la bague d'appui (14) peut être élargie de manière élastique dans une direction radiale par rapport à l'axe central (16) de la bague d'étanchéité (10) et comprend des premiers segments de bague (40) de forme stable qui sont reliés de manière articulée les uns aux autres dans la direction circonférentielle de la bague d'étanchéité (10) .

2. Bague d'étanchéité selon la revendication 1, **caractérisée en ce que** le matériau polymère (12) est moulé par injection sur la bague d'appui (14).

3. Bague d'étanchéité selon la revendication 1 ou 2, **caractérisée en ce que** le matériau polymère (12) de la bague d'étanchéité (10) présente un point de fusion inférieur au matériau de la bague d'appui (14).

4. Bague d'étanchéité selon la revendication 1, **caractérisée en ce que** les premiers segments de bague (40) sont formés respectivement par plusieurs entretoises profilées (88), qui sont agencées les unes derrière les autres espacées les unes des autres en direction de l'axe central (16) de la bague d'étanchéité (10), les entretoises profilées (88) de respectivement deux premiers segments de bague (40) agencés en position directement voisine engrenant alternativement l'une avec l'autre et étant reliées les unes aux autres de manière articulée dans la zone de leurs points de croisement (90).

5. Bague d'étanchéité selon la revendication 1, **caractérisée en ce que** les premiers segments de bague (40) sont agencés espacés les uns des autres dans la direction circonférentielle de la bague d'étanchéité (10) et sont respectivement reliés les uns aux autres par l'intermédiaire d'un deuxième segment de bague (44), qui est déformable de manière élastique au moins en sections.

6. Bague d'étanchéité selon la revendication 5, **caractérisée en ce que** les deuxièmes segments de bague (44) comprennent respectivement au moins une paire de branches profilées (50) munie d'une première et d'une deuxième branche profilée (52, 54), qui sont reliées l'une à l'autre par l'intermédiaire d'une section arrière (56) et qui peuvent être écartées de manière élastique relativement l'une de l'autre.

7. Bague d'étanchéité selon la revendication 6, **caractérisée en ce qu'**au moins une partie des deuxièmes segments de bague (44) comprend plusieurs paires de branches profilées (50), qui sont agencées en série les unes après les autres dans la direction circonférentielle et sont reliées les unes aux autres bout à bout par accouplement de matière.

8. Bague d'étanchéité selon l'une quelconque des revendications précédentes, **caractérisée en ce que** la surface (46) de la bague d'étanchéité (10) est formée au moins en sections par la bague d'appui (14).

9. Bague d'étanchéité selon la revendication 8, **caractérisée en ce que** la bague d'appui (14) dépasse au-dessus d'une section de surface formée par le matériau polymère (12) de la bague d'étanchéité (10).

10. Bague d'étanchéité selon l'une quelconque des revendications précédentes, **caractérisée en ce que** la bague d'appui (14) forme au moins en sections un canal de fluide agencé axialement (74) ou plusieurs tels canaux de fluide (74).

11. Bague d'étanchéité selon l'une quelconque des revendications précédentes, **caractérisée en ce que** la bague d'étanchéité (10) comprend une lèvre d'étanchéité (26) munie d'un bord d'étanchéité dynamique (28), la bague d'appui (14) étant agencée au moins en sections à l'intérieur de la lèvre d'étanchéité (26).

12. Bague d'étanchéité selon la revendication 11, **caractérisée en ce que** la bague d'appui (14) s'étend en sections ou sur toute la périphérie dans la lèvre d'étanchéité (26).

13. Bague d'étanchéité selon l'une quelconque des revendications précédentes, **caractérisée en ce que** la bague d'appui (14) est munie d'évidements de passage (42) agencés axialement ou radialement, le matériau polymère s'étendant dans les évidements de passage (42) .
